(19) Europäisches Patentamt
European Patent Office
Office européen des brevets

(11) **EP 4 422 268 A1**

(12) **EUROPEAN PATENT APPLICATION**
published in accordance with Art. 153(4) EPC

(43) Date of publication:
**28.08.2024 Bulletin 2024/35**

(21) Application number: **22891919.7**

(22) Date of filing: **07.11.2022**

(51) International Patent Classification (IPC):
**H04W 28/10** (2009.01)     **H04W 72/04** (2023.01)

(52) Cooperative Patent Classification (CPC):
**H04W 28/10; H04W 56/00; H04W 72/04;
H04W 72/0446; H04W 72/0453**

(86) International application number:
**PCT/CN2022/130182**

(87) International publication number:
**WO 2023/083125 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2021 CN 202111327690**

(71) Applicant: **Huawei Technologies Co., Ltd.
Shenzhen, Guangdong 518129 (CN)**

(72) Inventors:
• **LUO, Zhe
Shenzhen, Guangdong 518129 (CN)**
• **PENG, Jinlin
Shenzhen, Guangdong 518129 (CN)**
• **LI, Xinxian
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD, APPARATUS AND SYSTEM**

(57)     Embodiments of this application provide a communication method, apparatus, and system. The method includes: A network device performs time calibration on a first time unit of a first frequency band and a second time unit of a second frequency band; the network device sends first information to a terminal device based on the first frequency band and the first time unit, where the first information includes synchronization information; and the network device sends second information to the terminal device based on the second frequency band and the second time unit, where the second information includes information other than the synchronization information. For an obtained time window of the second information, refer to a time window of the first information. Therefore, communication efficiency between the terminal device and the network device in a carrier aggregation scenario is improved.

A terminal device receives first information from a network device based on a first frequency band and a first time unit    ⌇ 201

The terminal device receives second information from the network device based on a second frequency band and a second time unit    ⌇ 202

FIG. 2

EP 4 422 268 A1

## Description

This application claims priority to Chinese Patent Application No. 202111327690.8, filed with the China National Intellectual Property Administration on November 10, 2021 and entitled "COMMUNICATION METHOD, APPARATUS, AND SYSTEM", which is incorporated herein by reference in its entirety.

## TECHNICAL FIELD

Embodiments of this application relate to the field of communication technologies, and in particular, to a communication method, apparatus, and system.

## BACKGROUND

As a quantity of intelligent terminal users constantly grows, and a user service volume and a data throughput constantly increase, a higher requirement is imposed on a communication rate. To meet requirements on higher downlink and uplink peak rates, a higher transmission bandwidth is required. Because a high-bandwidth continuous spectrum is scarce, a carrier aggregation (Carrier Aggregation, CA) solution is proposed. Carrier aggregation aggregates two or more component carriers (Component Carriers, CCs) together to support a higher transmission bandwidth. Carrier aggregation includes carrier aggregation in a single base station and carrier aggregation in different base stations in a dual connectivity (dual connectivity, DC) scenario.

Currently, when a plurality of carriers are configured for one terminal device, how to improve communication efficiency between the terminal device and a network device is a problem that needs to be resolved.

## SUMMARY

Embodiments of this application provide a communication method, apparatus, and system, to improve communication efficiency between a terminal device and a network device in a carrier aggregation scenario.

According to a first aspect, an embodiment of this application provides a communication method, including: The network device sends first information to a terminal device based on the first frequency band and the first time unit, where the first information includes synchronization information; and the network device sends second information to the terminal device based on the second frequency band and the second time unit, where the second information includes information other than the synchronization information.

For an obtained time window of the second information, refer to a time window of the first information.

For example, the terminal device uses the time window of the first information to receive or obtain the second information. Specifically, the time window of the first information and the time window of the second information may not be aligned or have an offset in time domain. For example, the network device sends the first information in advance or delays sending of the second information, or the terminal device receives the first information in advance or delays receiving of the second information. In this case, the terminal device reads the second information based on the time window of the first information, to reduce interference of sharing the synchronization information, and reduce impact of a time deviation on system performance.

In this solution, communication between the terminal device and the network device may be designed based on a synchronization signal shared between a plurality of frequency bands, to improve communication efficiency between the terminal device and the network device.

In a possible implementation method, the network device performs time calibration on the first time unit of the first frequency band and the second time unit of the second frequency band.

Generally, the time unit is a unit corresponding to a unit of time. The unit of time is a unit of time or a scheduling unit used for information transmission in time domain. The unit of time in time domain may be a subframe, a slot (slot), a radio frame, a mini slot (mini slot or sub-slot), a plurality of aggregated slots, a plurality of aggregated subframes, a symbol, or the like, or may be a transmission time interval (transmission time interval, TTI for short). This is not limited in this application.

In a possible implementation method, a time deviation between the first time unit and the second time unit is less than or equal to a first threshold.

For example, the network device performs time calibration on a plurality of frequency bands, to ensure that an absolute value of a time deviation between a frequency band (for example, a band 2 or a band 3) that does not include synchronization information and a frequency band (for example, a band 1) that includes synchronization information is less than the first threshold X, that is, between positive and negative X or between -X and X, where X is an integer, and further improve effectiveness of sharing the synchronization signal between the plurality of frequency bands.

In a possible implementation method, the first time unit is earlier than the second time unit in time domain.

In a possible implementation method, the network device advances the obtained time window of the first information by a second threshold.

In a possible implementation method, the first time unit includes the time window of the first information and a time window of a cyclic prefix, and the time window of the first information does not overlap with the time window of the cyclic prefix; and the second time unit includes the time window of the second information and the time window of the cyclic prefix, and the time window of the second information does not overlap with the time window of the cyclic prefix.

Therefore, the network device performs time calibration on the plurality of frequency bands, and sends the synchronization information on the first frequency band in advance, to delay transmission of other information that does not include the synchronization information on another frequency band, and further reduce impact of the time deviation on performance, resolve a problem of interference caused when the synchronization signal is shared, reduce a precision requirement on performing time calibration on the plurality of frequency bands, and increase implementation feasibility.

According to a second aspect, an embodiment of this application provides a communication method, including: A terminal device receives first information from a network device based on a first frequency band and a first time unit, where the first information includes synchronization information; and the terminal device receives second information from the network device based on a second frequency band and a second time unit, where the second information includes information other than the synchronization signal.

For an obtained time window of the second information, refer to a time window of the first information.

In a possible implementation method, a time deviation between the first time unit and the second time unit is less than or equal to a first threshold.

In a possible implementation method, the first time unit is earlier than the second time unit in time domain.

In a possible implementation method, the terminal device advances the obtained time window of the first information by a second threshold.

In a possible implementation method, the first time unit includes the time window of the first information and a time window of a cyclic prefix, and the time window of the first information does not overlap with the time window of the cyclic prefix; and the second time unit includes the time window of the second information and the time window of the cyclic prefix, and the time window of the second information does not overlap with the time window of the cyclic prefix.

According to a third aspect, an embodiment of this application provides a communication apparatus. The apparatus may be a network device or a chip used for a network device. The apparatus has a function of implementing the method according to the first aspect or the implementation methods of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a terminal device or a chip used for a terminal device. The apparatus has a function of implementing the method according to the second aspect or the implementation methods of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a processor and a memory. The memory is configured to store computer-executable instructions. When the apparatus runs, the processor executes the computer-executable instructions stored in the memory, so that the apparatus performs any method according to the first aspect, the second aspect, and the implementation methods of the first aspect and the second aspect.

According to a sixth aspect, an embodiment of this application provides a communication apparatus, including a processor and an interface circuit. The processor is configured to communicate with another apparatus by using the interface circuit, and perform any method according to the first aspect, the second aspect, and the implementation methods of the first aspect and the second aspect. There are one or more processors.

According to a seventh aspect, an embodiment of this application provides a communication apparatus, including a processor. The processor is configured to be connected to a memory, and invoke a program stored in the memory, to perform any method according to the first aspect, the second aspect, and the implementation methods of the first aspect and the second aspect. The memory may be located inside or outside the apparatus. There are one or more processors.

According to an eighth aspect, an embodiment of this application further provides a computer-readable storage medium. The computer-readable storage medium stores instructions. When the instructions are run on a computer, a processor is enabled to perform any method according to the first aspect, the second aspect, and the implementation methods of the first aspect and the second aspect.

According to a ninth aspect, an embodiment of this application further provides a computer program product. The computer product includes a computer program. When the computer program is run, any method according to the first aspect, the second aspect, and the implementation methods of the first aspect and the second aspect is enabled to be performed.

According to a tenth aspect, an embodiment of this application further provides a chip system, including a processor. The processor is configured to perform any method according to the first aspect, the second aspect, and the implementation methods of the first aspect and the second aspect.

According to an eleventh aspect, an embodiment of this application further provides a communication system. The communication system includes a network device configured to perform the method according to any one of the first aspect or the implementation methods of the first aspect, and a terminal device configured to perform the method according to any one of the second aspect or the implementation methods of the second aspect.

## BRIEF DESCRIPTION OF DRAWINGS

FIG. 1 is a diagram of a network architecture to which an embodiment of this application is applicable;
FIG. 2 is a diagram of a communication method according to an embodiment of this application;
FIG. 3 is a diagram of a communication method according to an embodiment of this application;
FIG. 4 is a diagram of another communication method according to an embodiment of this application;
FIG. 5 is a diagram of a communication apparatus according to an embodiment of this application;
FIG. 6 is a diagram of another communication apparatus according to an embodiment of this application;
FIG. 7 is a diagram of a terminal device according to an embodiment of this application; and
FIG. 8 is a diagram of a network device according to an embodiment of this application.

## DESCRIPTION OF EMBODIMENTS

Technical solutions provided in embodiments of this application may be used in various communication systems, for example, a 5th generation (5th generation, 5G) communication system, a future evolved system, or a plurality of converged communication systems. The technical solutions provided in embodiments of this application may be used in a plurality of application scenarios, for example, machine to machine (machine to machine, M2M), macro-micro communication, enhanced mobile broadband (enhanced mobile broadband, eMBB), ultra-reliable low-latency communication (ultra-reliable low-latency communication, URLLC), and massive machine-type communications (massive machine-type communications, mMTC). The scenarios may include but are not limited to a scenario of communication between communication devices, a scenario of communication between network devices, a scenario of communication between a network device and a communication device, and the like. The following provides descriptions by using an example in which the technical solutions are used in a scenario of communication between a network device and a terminal.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to similar technical problems.

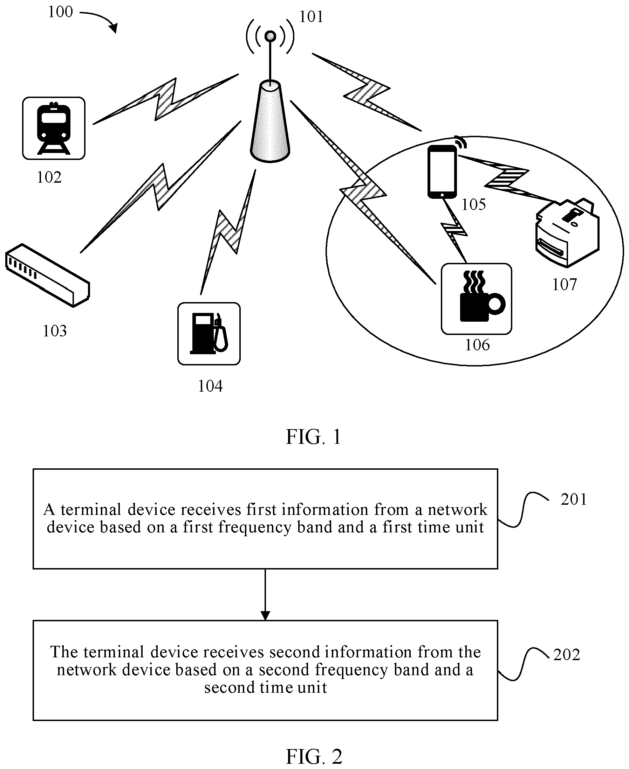

For ease of understanding the technical solutions of this application, FIG. 1 is a diagram of a communication system 100 to which an embodiment of this application is applicable. As shown in FIG. 1, the communication system may include at least one network device, for example, a network device 101. The communication system may further include at least one terminal device, for example, terminal devices 102 to 107. The terminal devices 102 to 107 may be mobile or fixed. The network device 101 may communicate with one or more of the terminal devices 102 to 107 through a radio link. That is, the network device may send a signal to the terminal device, and the terminal device may also send a signal to the network device. For example, each network device may provide communication coverage for a specific geographical area, and may communicate with a terminal device located in the coverage. For example, the network device may send configuration information to the terminal device, and the terminal device may send uplink data to the network device based on the configuration information. For another example, the network device may send downlink data to the terminal device. Therefore, the network device 101 and the terminal devices 102 to 107 in FIG. 1 form a communication system.

Optionally, the terminal devices may also directly communicate with each other. For example, direct communication between the terminal devices may be implemented by using a D2D technology or the like. As shown in FIG. 1, direct communication between the terminal devices 105 and 106 and between the terminal devices 105 and 107 may be performed by using the D2D technology. The terminal device 106 and the terminal device 107 may separately or simultaneously communicate with the terminal device 105.

Alternatively, the terminal devices 105 to 107 may separately communicate with the network device 101. In one aspect, the terminal device may directly communicate with the network device 101. For example, the terminal devices 105 and 106 in the figure may directly communicate with the network device 101. In another aspect, the terminal device may indirectly communicate with the network device 101. For example, the terminal device 107 in the figure communicates with the network device 101 via the terminal device 105.

It should be understood that FIG. 1 shows a communication link between one network device, a plurality of terminal devices, and communication apparatuses. Optionally, the communication system 100 may include a plurality of network devices, and coverage of each network device may include another quantity of terminal devices, for example, more or fewer terminal devices. This is not specifically limited in this application.

A plurality of antennas may be configured for the foregoing communication apparatuses, for example, the network device 101 and the terminal devices 102 to 107 in FIG. 1. The plurality of antennas may include at least one transmit antenna configured to send a signal and at least one receive antenna configured to receive a signal. In addition, each communication apparatus further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal device by using a multi-antenna technology.

Optionally, the wireless communication system 100 may further include another network entity, for example, a network controller and a mobility management entity. This is not specifically limited in this application.

It should be further understood that FIG. 1 is merely a simplified diagram of an example for ease of understanding. The communication system 100 may further include another network device or another terminal device that is not shown in FIG. 1.

It should be noted that, based on signal transmission, embodiments of this application are also applicable to a scenario of a homogeneous network and a heterogeneous network, a low frequency scenario (sub 6G), a high frequency scenario (above 6G), terahertz, optical communication, a frequency division duplex (frequency division duplex, FDD) and time division duplex (time division duplex, TDD) system, and a non-terrestrial network (non-terrestrial network, NTN), for example, satellite communication. In addition, a transmission point is not limited in this application, and the transmission point may be used for coordinated multipoint transmission between macro base stations, between micro base stations, and between a macro base station and a micro base station. In addition, embodiments of this application are applicable to communication between a base station and a terminal, communication between terminals, and communication between base stations, and are further applicable to a CU/DU architecture, a CP/UP separation architecture, and the like. A beam-based multi-carrier communication system, for example, an NR system, is used as an example. The system includes uplink (from a terminal device to a network device) and downlink (from an access network device to a terminal device) communication in the communication system. The uplink communication includes transmission of an uplink physical channel and an uplink signal, and the downlink communication includes transmission of a downlink physical channel and a downlink signal. The uplink physical channel includes a random access channel (random access channel, PRACH), a physical uplink control channel (physical uplink control channel, PUCCH), a physical uplink data channel (physical uplink shared channel, PUSCH), and the like. The uplink signal includes a sounding reference signal (sounding reference signal, SRS), an uplink control channel demodulation reference signal (PUCCH demodulation reference signal, PUCCH-DMRS), an uplink data channel demodulation reference signal (PUSCH demodulation reference signal, PUSCH-DMRS), an uplink phase tracking reference signal (phase tracking reference signal, PTRS), an uplink positioning signal, and the like. The downlink physical channel includes a physical broadcast channel (physical broadcast channel, PBCH), a physical downlink control channel (physical downlink control channel, PDCCH), a physical downlink data channel (physical downlink shared channel, PDSCH), and the like. The downlink signal includes a primary synchronization signal (primary synchronization signal, PSS), a secondary synchronization signal (secondary synchronization signal, SSS), a downlink control channel demodulation reference signal (PDCCH demodulation reference signal, PDCCH-DMRS), a downlink data channel demodulation reference signal (PDSCH demodulation reference signal, PDSCH-DMRS), a PTRS, a channel state information reference signal (channel state information reference signal, CSI-RS), a cell signal (cell reference signal, CRS), a fine synchronization signal (time/frequency tracking reference signal, TRS), a positioning reference signal (positioning reference signal, PRS), and the like. This is not specifically limited in this application.

It should be understood that the technical solutions provided in this application are mainly used in a wireless communication system. The wireless communication system includes communication devices, and the communication devices may perform wireless communication by using an air interface resource. The communication devices may include a network device and a terminal device. The air interface resource may include at least one of a time-domain resource, a frequency-domain resource, a code resource, and a space resource. The technical solutions provided in this application are further used in another or future communication system, for example, a sixth generation mobile communication system. This is not limited in this application.

In embodiments of this application, the terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent or user apparatus, a soft terminal, or the like, and includes various hand-held devices, in-vehicle devices, wearable devices, or computing devices that have a wireless communication function, or other processing devices connected to a wireless modem. The terminal may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine-type communication (machine-type communication, MTC) terminal, or the like.

The terminal device in embodiments of this application may also be a mobile phone (mobile phone), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held terminal, a notebook computer, a cordless phone (cordless phone), a wireless local loop (wireless local loop, WLL) console, a terminal device in a future 5G network, a terminal device in a future evolved public land mobile network PLMN, or the like.

In addition, the terminal device may alternatively be a terminal device in an internet of things (internet of things, IoT) system. The IoT is an important part of future information technology development. A main technical feature of the IoT is to connect things to a network by using a communication technology, to implement a smart network for human-machine interconnection and thing-thing interconnection. It should be understood that, a specific form of the terminal device is not limited in this application.

In addition, the terminal device may further include sensors such as an intelligent printer, a train detector, and a gas station, and main functions include collecting data (a function of some terminal devices), receiving control information and downlink data of a network device, emitting an electromagnetic wave to transmit uplink data to the network device.

In embodiments of this application, the network device may be an apparatus that is deployed in a radio access network and that provides a wireless communication function for the terminal device, and may be a device configured to communicate with the terminal device or a chip of the device. The network device includes but is not limited to: a radio network controller (radio network controller, RNC), a base station controller (base station controller, BSC), a home base station (for example, home evolved NodeB, or home NodeB, HNB), a baseband unit (baseband unit, BBU), an access point (access point, AP) in a wireless fidelity system, a radio relay node, a radio backhaul node, a transmission point (transmission point, TP), a transmission and reception point (transmission and reception point, TRP), or the like, or may be a gNB or a transmission point TRP or TP in a 5G NR system, one or a group of antenna panels (including a plurality of antenna panels) of a base station in the 5G system, or a network node that forms the gNB or the transmission point, for example, the baseband unit BBU or a distributed unit (distributed unit, DU), and the like.

The network device in embodiments of this application may include various forms of macro base stations, micro base stations (also referred to as small cells), relay stations, access points, and the like, and may be a base station (base transceiver station, BTS) in a global system for mobile communications GSM or a code division multiple access CDMA system, or may be a NodeB (NodeB, NB) in a wideband code division multiple access WCDMA system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a wearable device or an in-vehicle device, a wearable device, a network device in a future 5G network, a network device in a future evolved public land mobile network (public land mobile network, PLMN), or the like.

In some network deployments, the network device may include a central unit (central unit, CU) and a distributed unit (distributed unit, DU). The network device may further include a radio unit (radio unit, RU) and an active antenna unit (active antenna unit, AAU). The CU implements some functions of the network device. For example, the CU is responsible for processing non-real-time protocols and services, and implements functions of a radio resource control (radio resource control, RRC) layer and a packet data convergence protocol (packet data convergence protocol, PDCP) layer. The DU implements some functions of the network device. For example, the DU is responsible for processing physical layer protocols and real-time services, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in the architecture, higher layer signaling (for example, RRC layer signaling) may also be considered to be sent by the DU, or sent by the DU and the AAU.

It may be understood that the network device may be a CU node, a DU node, or a device including a CU node and a DU node. In addition, the CU may be classified as a network device in a radio access network RAN, or the CU may be classified as a network device in a core network CN. This is not limited herein.

The network device provides a service for a cell. The terminal device communicates with the cell by using transmission resources (for example, a frequency-domain resource or a spectrum resource) allocated by the network device. The cell may be a macro base station (for example, a macro eNB or a macro gNB), or may be a base station corresponding to a small cell (small cell). The small cell herein may include a metro cell (metro cell), a micro cell (micro cell), a pico cell (pico cell), a femto cell (femto cell), and the like. The small cells have characteristics of small coverage and low transmit power, and are applicable to providing a high-rate data transmission service.

Alternatively, the network device may be a positioning service center, for example, an evolved serving mobile location center (evolved serving mobile location center, E-SMLC) or a location management function (location management function, LMF). The positioning service center is used for obtaining measurement information and location information of the terminal device and a mobile phone as the network device. The positioning service center is further responsible for performing location resolution on a measured quantity of the terminal device, to determine a location of the terminal device. Information exchange between the terminal device and the positioning service center may be implemented by an LTE positioning protocol (LTE positioning protocol) or an NR positioning protocol (NR positioning protocol). Interaction between the network device and the positioning center is implemented by an LTE positioning protocol A (LTE positioning protocol A, LPPa) or an NR positioning protocol A (NR positioning protocol A, NRPPa).

In embodiments of this application, the network device and the terminal device include a radio resource control RRC signaling exchange module, a media access control MAC signaling exchange module, and a physical PHY signaling exchange module. The RRC signaling exchange module may be a module that is used by the network device and the terminal device to send and receive RRC signaling. The MAC signaling exchange module may be a module used by the network device and the terminal device to send and receive media access control control element (media access control control element, MAC CE) signaling. The PHY signaling and data interaction module may be a module used by the network device and the terminal device to send and receive uplink control signaling, downlink control signaling, uplink and downlink data, or downlink data.

With increasing requirements for network capacity, frequency division multiplex (frequency division duplex, FDD) spectrum resources are widely used. In addition, as a quantity of intelligent terminal users constantly grows, and a user service volume and a data throughput constantly increase, a higher requirement is imposed on a communication rate. To meet requirements on higher downlink and uplink peak rates, a higher transmission bandwidth is required. Because a high-bandwidth continuous spectrum is scarce, a carrier aggregation (Carrier Aggregation, CA) solution is proposed. Carrier aggregation aggregates two or more component carriers (Component Carriers, CCs) together to support a higher transmission bandwidth, and further implement FDD carrier aggregation and increase use of spectrums by user equipment UE. Specifically, CA may implement multi-frequency resource integration, and aggregate spectrum resources of a same frequency band or different frequency bands for use by a terminal device, to improve resource utilization of an entire network system and improve user experience.

It should be understood that CA may aggregate two or more component carriers (component carriers, CCs) together to support a higher transmission bandwidth. To ensure backward compatibility, each carrier is generally not more than a maximum of 20 MHz. Actually, one cell may include at least one component carrier. Generally, a component carrier may be understood or equivalent to a frequency band. To efficiently utilize fragmentation spectrums, carrier aggregation supports aggregation of different component carriers.

In this embodiment of this application, meanings of the carrier and the component carrier may be understood as the same. A CA function may support contiguous carrier aggregation or non-contiguous carrier aggregation. To efficiently utilize fragmentation spectrums, carrier aggregation supports aggregation of different component carriers. Specifically, aggregation of component carriers with a same bandwidth or different bandwidths, aggregation of adjacent or non-adjacent component carriers in a same frequency band, and aggregation of component carriers in different frequency bands are included. In other words, carrier aggregation may include three types of scenarios: intra-band contiguous carrier aggregation, intra-band non-contiguous carrier aggregation, and inter-band non-contiguous carrier aggregation.

Carrier aggregation in a single connectivity scenario means that a cell in a network device is configured as a primary cell of a terminal device, and another cell in the network device is configured as a secondary cell of the terminal device. The primary cell (Primary Cell, PCell) is a cell established when the terminal device initially establishes a connection, or a cell in which radio resource control (Radio resource control, RRC) connection reestablishment is performed, or a primary cell specified during handover (handover). The primary cell is responsible for RRC communication with the terminal device. A component carrier corresponding to the primary cell is referred to as a primary component carrier (Primary Component Carrier, PCC). A downlink carrier of the primary cell is referred to as a downlink primary component carrier (DL PCC), and an uplink carrier of the primary cell is referred to as an uplink primary component carrier (UL PCC). The secondary cell (Secondary Cell, SCell) is added during RRC reconfiguration, and is used to provide an additional radio resource. There is no RRC communication between the secondary cell and the terminal device. A component carrier corresponding to the secondary cell is referred to as a secondary component carrier (Secondary Component Carrier, SCC). A downlink carrier of the secondary cell is referred to as a downlink secondary component carrier (DL SCC), and an uplink carrier of the secondary cell is referred to as an uplink secondary component carrier (UL SCC).

Carrier aggregation in a dual connectivity scenario means that a cell in a primary network device is configured as a primary cell (namely, a primary cell in a master cell group (Master cell group, MCG)) of a terminal device, a cell in a secondary network device is configured as a primary secondary cell (Primary Secondary Cell, Primary SCell) (namely, a primary cell in a secondary cell group (Secondary cell group, SCG)) of the terminal device, and a cell that is in the primary network device or the secondary network device and that is other than the primary cell and the primary secondary cell is configured as the secondary cell of the terminal device. The primary cell is a cell established when the terminal device initially establishes a connection, or a cell in which RRC connection reestablishment is performed, or a primary cell specified during handover (handover). The primary cell is mainly responsible for RRC communication with the terminal device. A component carrier corresponding to the primary cell is referred to as a primary component carrier. A downlink carrier of the primary cell is referred to as a downlink primary component carrier (DL PCC), and an uplink carrier of the primary cell is referred to as an uplink primary component carrier (UL PCC). The primary secondary cell is generally added during RRC reconfiguration, and is used to provide an additional radio resource. There is no RRC communication between the primary secondary cell and the terminal device. A component carrier corresponding to the primary secondary cell is referred to as a secondary component carrier. A downlink carrier of the primary secondary cell is referred to as a downlink secondary component carrier (DL SCC), and an uplink carrier of the primary secondary cell is referred to as an uplink secondary component carrier (UL SCC).

The primary cell is determined during connection establishment, and the secondary cell is added/modified/released by using an RRC connection reconfiguration message after initial access is complete.

A relationship between a cell (cell) and a carrier (carrier) is as follows: The cell has no physical entity, is merely a logical concept, and is a minimum logical unit that provides a complete set of services (such as calling, called, mobile, and internet access services) for users in a mobile communication network. The carrier is a radio signal (an electromagnetic wave) that is transmitted by the network device and that has a specific frequency, bandwidth, and standard, and is used to carry information. One cell may have one or more downlink carriers and/or one or more uplink carriers. One cell may include one downlink carrier, one uplink carrier, and one supplementary uplink (supplementary uplink, SUL) carrier. The SUL carrier means that only an uplink resource is used for transmission of a current communication standard.

The following further describes a relationship between a frequency band group, a cell group, and/or a carrier group.

For example, the frequency band group includes one or more frequency bands, one frequency band includes one or more cells, and one cell includes one or more carriers. The cell group includes one or more cells, and one cell includes one or more carriers. The carrier group includes one or more carriers.

Alternatively, the cell group includes one or more cells, one cell includes one or more carriers, and the at least one carrier is on one or more frequency bands.

All carriers included in the foregoing groups may be uplink carriers and/or downlink carriers.

The following provides descriptions with reference to an example. For example, a cell 1 and a cell 2 are configured on a frequency band 1, the cell 1 includes one uplink carrier (UL CC-1) and one downlink carrier (DL CC-1), the cell 2 includes two uplink carriers (UL CC-2 and UL CC-3) and one downlink carrier (DL CC-2), the frequency band 2 is configured with a cell 3, and the cell 3 includes one uplink carrier (UL CC-4) and one downlink carrier (DL CC-3).

If the network device defines a frequency band group as {frequency band 1, frequency band 2}, carriers corresponding to the frequency band group include UL CC-1, UL CC-2, UL CC-3, UL CC-4, DL CC-1, DL CC-2, and DL CC-3.

If the network device defines a cell group as {cell 1, cell 2}, carriers corresponding to the cell group include UL CC-1, UL CC-2, UL CC-3, DL CC-1, and DL CC-2.

If the network device defines a carrier group as {UL CC-1, UL CC-4, DL CC-1, DL CC-3}, carriers in the carrier group include UL CC-1, UL CC-4, DL CC-1, and DL CC-3.

Optionally, the network device may alternatively define one uplink carrier group and one downlink carrier group. For example, if the network device defines an uplink carrier group as {UL CC-1, UL CC-2, UL CC-3, UL CC-4}, carriers in the carrier group include UL CC-1, UL CC-2, UL CC-3, and UL CC-4. For another example, if the network device defines a downlink carrier group as {DL CC-1, DL CC-2, DL CC-3}, carriers in the carrier group include DL CC-1, DL CC-2, and DL CC-3.

Therefore, it may be understood that the network device specifies a group of carriers by defining a frequency band group, a cell group, and/or a carrier group.

For the PCell or the SCell, there are two states: an active state and an inactive state. For example, the SCell is in an active state, and a physical downlink control channel (physical downlink control channel, PDCCH) is configured for the cell. The terminal device needs to monitor the PDCCH of the cell, and perform transmission with the network device based on a configuration of the network device and uplink and downlink scheduling information. When the SCell is in an inactive state, the terminal device does not need to monitor and/or transmit uplink and downlink signals in the cell.

Specifically, the CA configuration manner may include: First, the network device indicates, by using RRC signaling, the terminal device to add an SCell, and provides a related configuration of the SCell. In this case, a default state of the SCell is an inactive state. Then, the network device indicates, by activating/inactivating media access control-control element (media access control-control element, MAC CE) signaling, the terminal device to activate or inactivate the SCell. After the SCell is activated, the terminal device performs corresponding signal transmission in the cell. In addition, the network device may further configure an inactive timer for the terminal device. When the timer expires, the UE considers that the state of the SCell changes from the active state to the inactive state.

With enhancement of the CA technology, a sleep state is introduced. To be specific, when the SCell is in a sleep state, the terminal device does not need to listen to PDCCH scheduling information for the cell, and generally maintains measurement and reporting of channel state information (channel status information, CSI).

In addition, the network device may periodically broadcast a synchronization signal and physical broadcast channel block (synchronization signal and physical broadcast channel block, SSB), and the terminal device implements time-frequency synchronization by receiving the SSB. In addition, the SSB may be further used for radio resource management (radio resource management, RRM) measurement and the like. For the PCell or the SCell, when receiving an SSB of the PCell or the SCell, the terminal device may prepare a radio frequency link, to subsequently test and report CSI in the PCell or the SCell, and perform normal data transmission. In the foregoing solution, cell activation depends on synchronization and channel measurement. When burst data arrives, the burst packet cannot be transmitted based on the SCell because of a high activation latency. In addition, if an SSB needs to be sent on each frequency band and/or carrier, resource overheads of the network device are increased.

To resolve a problem that a cell activation latency is high and synchronization signal overheads are high because an SSB needs to be sent on each frequency band, considering that a network device can ensure time-frequency synchronization between adjacent frequency bands in a plurality of frequency bands, a solution in which a plurality of frequency bands share synchronization signal transmission and activate a synchronization-free process of the adjacent frequency bands is proposed. Specifically, a plurality of frequency bands may share a synchronization signal. To be specific, a communication device sends the synchronization signal on one frequency band. After obtaining the synchronization information based on the synchronization signal, the terminal device uses the synchronization information for newly activated adjacent frequency bands, to activate a time-synchronization-free frequency band. In the process of activating the time-synchronization-free frequency band, a latency of only 1 ms to 2 ms is required, and the frequency band may be directly activated by using an indication of downlink control information (downlink control information, DCI), to implement transmission between the network device and the terminal device.

In this embodiment of this application, in a carrier aggregation scenario, communication between the terminal device and the network device may be designed based on a synchronization signal shared between a plurality of frequency bands, to improve communication efficiency between the terminal device and the network device.

With reference to the foregoing descriptions, FIG. 2 is a schematic flowchart of a communication method according to an embodiment of this application. In FIG. 2, interaction between a network device and a terminal device is used as an example for descriptions. An operation performed by the network device may also be performed by a chip or a module in the network device, and an operation performed by the terminal device may also be performed by a chip or a module in the terminal device. Refer to FIG. 2. The method includes the following steps.

201: The terminal device receives first information from the network device based on a first frequency band and a first time unit, where the first information includes synchronization information.

Correspondingly, the network device sends the first information to the terminal device based on the first frequency band and the first time unit, where the first information includes the synchronization information. For example, the synchronization information includes an SSB and/or a tracking reference signal (tracking reference signal, TRS), so that the terminal device can implement downlink synchronization with a base station based on the SSB and/or the TRS.

202: The terminal device receives second information from the network device based on a second frequency band and a second time unit, where the second information includes information other than the synchronization information.

Correspondingly, the network device sends the second information to the terminal device based on the second frequency band and the second time unit, where the second information includes the information other than the synchronization information.

It may be understood that the first frequency band may alternatively be a first carrier, and the second frequency band may alternatively be a second carrier, to implement communication interaction in the carrier aggregation scenario.

In this embodiment of this application, for an obtained time window of the second information, refer to a time window of the first information. A person skilled in the art may understand that the reference action may be performed by the terminal device. For example, the terminal device uses the time window of the first information to receive or obtain the second information. Specifically, the time window of the first information and the time window of the second information may not be aligned or have an offset in time domain. For example, the network device sends the first information in advance or delays sending of the second information, or the terminal device receives the first information in advance or delays receiving of the second information. In this case, the terminal device reads the second information based on the time window of the first information, to reduce interference of sharing the synchronization information, and reduce impact of a time deviation on system performance.

For example, the time unit is associated with the time window in time domain. For example, the first time unit corresponding to the first frequency band includes a first time window. Because the first time window is used to obtain the first information, the first time window may also be referred to as an obtained time window or an actual time window of the first information. The second time unit corresponding to the second frequency band includes a second time window. Because the terminal device obtains the second information by referring to the first time window, the second time window may have an offset or be not aligned with an obtained time window or an actual time window of the second information in time domain. In this case, the first time window may be referred to as a reference time window or an original time window. For example, the first time window is an actual time window in which the network device sends the first information, and the terminal device advances the actual time window as a reference time window or an original time window for obtaining the second information.

Generally, the time unit is a unit corresponding to a unit of time. The unit of time is a unit of time or a scheduling unit used for information transmission in time domain. The unit of time in time domain may be a subframe, a slot (slot), a radio frame, a mini slot (mini slot or sub-slot), a plurality of aggregated slots, a plurality of aggregated subframes, a symbol, or the like, or may be a transmission time interval (transmission time interval, TTI for short). This is not limited in this application. One or more time units in a unit of time in time domain may include a time unit in another unit of time, or a length of one or more time units in a unit of time in time domain is equal to a total length of time units in another unit of time. For example, one mini-slot/slot/subframe/radio frame includes a plurality of symbols, one slot/subframe/radio frame includes a plurality of mini-slots, one subframe/radio frame includes a plurality of slots, and one radio frame includes a plurality of subframes. There may also be other inclusion examples. This is not limited in this application.

In this embodiment of the present invention, an identifier of the time unit may also be referred to as an index or another name of the time unit, for example, used to distinguish, mark, or count different time units in a unit of time.

It may be understood that the first information and/or the second information may be carried in a message, and sent by the network device to the terminal device. The message may be higher layer signaling, for example, a broadcast message, a system message, a downlink message (for example, a message 2 or a message 4) in an access process, radio resource control (English: Radio Resource Control, RRC for short) signaling, or media access control (English: Media Access Control or Medium Access Control, MAC for short) CE (Control Element). Alternatively, the message may be physical layer downlink control information (English: Downlink Control Information, DCI for short). To be specific, the first information and/or the second information may be carried over a physical channel, and the physical channel may be a physical downlink control channel. This is not limited in this application.

The following describes a first implementation in which 201 is performed before 202. Specifically, the network device first sends the SSB to the terminal device, and then subsequently sends other information to the terminal device, to ensure that the terminal can use the synchronization information for adjacent frequency bands in advance, for example, newly activated adjacent frequency bands and/or adjacent carriers, and further activate a frequency band and/or a carrier without the synchronization information.

Generally, the network device may perform time calibration on the first time unit of the first frequency band and the second time unit of the second frequency band. Specifically, the network device adjusts a time deviation between the first time unit and the second time unit to be less than or equal to a first threshold. For example, the network device performs time calibration on a plurality of frequency bands, to ensure that an absolute value of a time deviation between a frequency band (for example, a band 2 or a band 3) that does not include synchronization information and a frequency band (for example, a band 1) that includes synchronization information is less than the first threshold X, that is, between positive and negative X or between -X and X, where X is an integer, and further improve effectiveness of sharing the synchronization signal between the plurality of frequency bands.

Optionally, in time domain, a length of X is less than a length of a cyclic prefix (Cyclic Prefix, CP), and the length of the CP is less than a length of an orthogonal frequency division multiplexing (Orthogonal Frequency Division Multiplexing, OFDM) symbol, to reduce difficulty in performing time calibration by the network device. In terms of the time length, the length of X may be far less than the length of the CP, and the length of the CP may be far less than the length of the OFDM symbol. For example, a value of X may be any one of 32.5 nanoseconds (nanosecond, ns), 50 ns, 65 ns, and 100 ns, and the length of the CP is approximately 4 microseconds ($\mu$s).

In an OFDM-based wireless communication system, to resist inter-symbol interference caused by channel multipath, a CP is added to a symbol. A larger latency spread of the multipath indicates a requirement on a longer CP. For a specific type of a subcarrier spacing, to meet requirements on the latency spread in different scenarios, two types of CPs: a normal CP (Normal Cyclic Prefix, NCP) and an extended CP (Extended Cyclic Prefix, ECP) may be used. The NCP and the ECP are two CPs with different lengths. A length of the ECP is longer than a length of the NCP, and CP overheads are higher.

During CP configuration, because a latency spread of a channel of different terminals is different, or parameters such as modulation and coding schemes (Modulation and Coding Schemes, MCSs), transmission modes, BLERs required by a transmitted service, or quantities of maximum transmission times of different channels of different terminals or of a same terminal are different, requirements on CP types are different. Therefore, a radio access network device may configure a CP based on a time unit or at least one channel or at least one symbol in a time unit, to meet different user requirements.

In this embodiment of the present invention, the first time unit includes the time window of the first information and a time window of a cyclic prefix, and the time window of the first information does not overlap with the time window of the cyclic prefix. The second time unit includes the time window of the second information and the time window of the cyclic prefix, and the time window of the information does not overlap with the time window of the cyclic prefix. For example, the first information or the second information may be understood as an OFDM symbol or an OFDM symbol-based information carrier.

The following describes two methods for performing time calibration by a network device.

Method 1

The time calibration is performed through a calibration link, where the link includes a time deviation measurement module and a sending time adjustment module. The time deviation measurement module is configured to measure a time deviation of signals of two frequency bands, and the sending time adjustment module is configured to adjust sending time of the signals of the two frequency bands based on a result of the time deviation, to ensure that an absolute value of the time deviation is less than a threshold X. The time deviation may include a deviation caused by limited calibration precision and real-time performance of the calibration link, and/or a deviation introduced by a part that is not subsequently calibrated.

Method 2

The method for performing time calibration is performed by using a broadband module. A plurality of frequency bands may be sent by using a same broadband module, and input of the broadband module is a digital signal of plurality of frequency bands, to ensure that no time deviation exists, or the broadband module is configured to ensure that an absolute value of a time deviation between signals of the plurality of frequency bands output by the broadband module is less than a threshold X. The time deviation may include a deviation of the broadband module, and/or a deviation introduced by a part that is not subsequently calibrated.

Therefore, by performing time calibration on the plurality of frequency bands, the network device may control the absolute value of the time deviation within a specific range. Further, the network device needs to determine directions of time offsets corresponding to the plurality of frequency bands.

In this embodiment of the present invention, the first time unit is earlier than the second time unit in time domain. For example, the network device advances the first time unit based on a second threshold; or the network device delays the second time unit based on a third threshold.

Specifically, the time offset is used to determine a time sequence relationship of information transmitted between the plurality of frequency bands. Optionally, the terminal device may receive indication information sent by the network device, where the indication information indicates relative locations or absolute locations used to send different information on different frequency bands. For example, the network device may flexibly indicate an offset of a second location relative to a first location, and the terminal device may determine the second location based on the indication information by using the first location and the offset, to improve flexibility of resource allocation, and avoid a conflict between sending occasions of different information on different frequency bands.

Sending of the first information and the second information is as an example. The offset may be an offset value and/or an offset direction between the first location at which the first information is sent and the second location at which the second information is sent.

Optionally, in time-frequency domain, a granularity of the offset value may be a resource element (resource element, RE), a resource block (resource block, RB), a resource block group (resource block group, RBG), a slot (slot), a symbol (symbol), a basic unit of time, a subcarrier (subcarrier), a sub-band (sub-band), or the like.

Specifically, the granularity of the offset value may be a unit used when the offset value between the first location and the second location is calculated. For example, in frequency domain, the second location is determined by the first location moving upward or downward by N RBs. In this case, a granularity of the offset value is an RB. In time domain, the second location is also determined by the first location moving upward or downward by N slots. In this case, a granularity of the offset value is a slot. It may be understood that the upward offset indicates an offset in a direction of an increasing frequency or time forward, and the downward offset indicates an offset in a direction of a decreasing frequency or time backward.

For a system with a plurality of frequency bands in which the synchronization information is shared, the terminal device uses synchronization information obtained from one frequency band, and uses the synchronization information on another frequency band. Specifically, using the synchronization information may be understood as intercepting a time window location of an OFDM symbol corresponding to the synchronization information. The signal sent by the network device may be represented as a continuous complex number function in time domain, and includes a plurality of OFDM symbols and CPs. Each OFDM symbol is preceded by a corresponding CP. For example, information or content associated with the CP may be information or content located at a tail end or an end of the OFDM symbol. For ease of description, discrete sampling is performed on a continuous signal by using a basic unit of time. The basic unit of time may be understood as a sampling interval of the continuous signal by the terminal device. For example, for a carrier with a 20 megahertz (megahertz, MHz) bandwidth, sampling is performed by using a frequency of 30.72 MHz, and the sampling interval is 32.55 ns. A sampled discrete sequence is equivalent to the original continuous signal in descriptions. In this case, a length of the sequence corresponds to duration of the signal. A time-domain discrete signal of an OFDM symbol is a sequence $[S_0, S_1, ... , S_{N-M-1}, S_{N-M}, S_{N-M+1}, ... , S_{N-1}]$, where N is a length of the OFDM symbol, and a time-domain discrete signal of a corresponding CP is a sequence $[S_{N-M}, S_{N-M+1}, ... , S_{N-1}]$, where M is a length of the CP. It can be learned that content of the CP may be the same as content at a tail end of the OFDM symbol. In this case, a time-domain discrete signal obtained by splicing the OFDM symbol and the CP of the OFDM symbol is $[S_{N-M}, S_{N-M+1}, ... , S_{N-1}, S_0, S_1, ... , S_{N-1}]$. Therefore, the CP corresponding to the OFDM symbol is placed before the OFDM symbol. During receiving, the terminal device needs to remove the CP based on the time window location, to obtain the OFDM symbol, that is, obtain $[S_0, S_1, ... , S_{N-1}]$. On the frequency band including the synchronization information, the terminal device may obtain an accurate time window location based on the synchronization information. However, on a frequency band that does not include the synchronization information, the terminal obtains the OFDM symbol by using a time window location that is the same as that of the frequency band that includes the synchronization information.

However, in an actual communication process, due to differences between components and channels, there is still a specific residual time deviation between calibrated multi-frequency band signals. Due to existence of the residual time deviation, a time deviation exists between an OFDM symbol intercepted by the terminal on a frequency band that does not include the synchronization information and an actual OFDM symbol. For example, when the time of the frequency band that does not include the synchronization information deviates backward, the intercepted OFDM symbol includes a part of an actual OFDM symbol and a part of a corresponding CP. For example, the intercepted OFDM symbol is $[S_{N-K}, S_{N-K+1}, ... , S_{N-1}, S_0, S_1, ... , S_{N-K-1}]$, and K is a length intercepted in advance. Therefore, the intercepted OFDM symbol is a cyclic shift of the actual OFDM symbol. For the terminal device, the interception is equivalent to an increase in the latency spread, and has small impact on performance. However, when the time of the frequency band that does not include the synchronization information deviates forward, the intercepted OFDM symbol includes a part of a corresponding CP and a part of a corresponding CP of a next OFDM symbol. For the terminal device, the interception causes inter-symbol interference (ISI), and has large impact on performance.

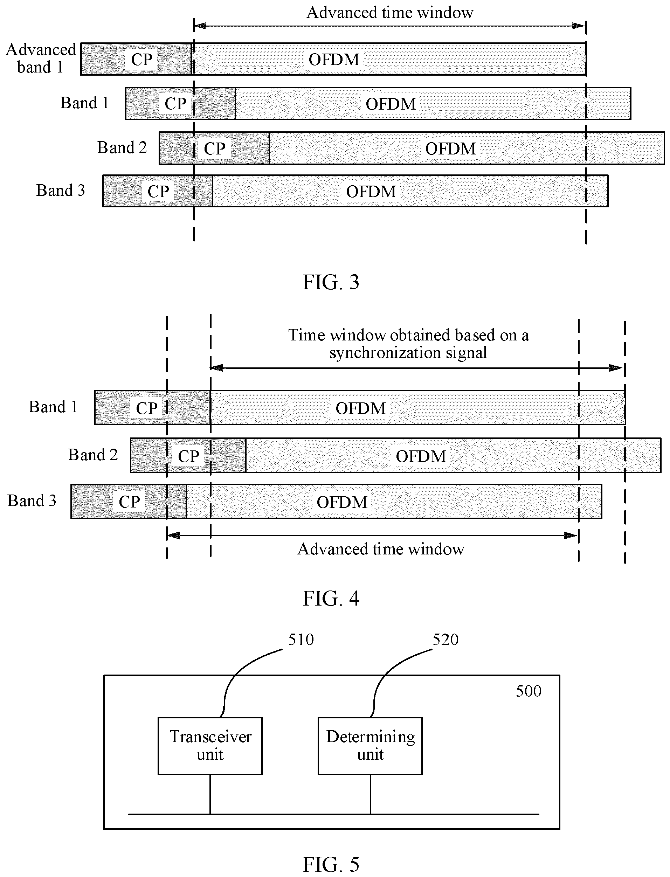

As shown in FIG. 3, to ensure that the network device can send the synchronization information to the terminal device in advance, a method for sending the synchronization information in advance is that the network device sends, in advance, a signal that is located on the first frequency band (for example, a band 1) and that includes the synchronization information. A time amount for sending the synchronization information in advance may be the foregoing threshold X. Another method for sending the synchronization information in advance is that the network device performs a forward cyclic shift on an OFDM symbol on the band 1, and then adds a CP. For example, the sent OFDM symbol is $[S_K, S_{K+1}, ... , S_{N-1}, S_0, S_1, ... , S_{K-1}]$, and the sent CP is $[S_{N-M+K}, S_{N-M+K+1}, ... , S_{N-1}, S_0, S_1, ... , S_{K-1}]$, where K is a length for sending in advance, and time corresponding to the K basic units of time is X. Because the CP of the OFDM symbol is the same as a last part of the OFDM symbol, the manner is equivalent to sending in advance. Still another method for sending the synchronization information in advance is that the network device adjusts transmission time, so that a signal of a band 1 that includes a synchronization signal is sent in advance.

Then, the terminal device receives, on the band 1, the synchronization information sent by the network device, performs time synchronization with the network device by using the synchronization information, and obtains a time window location of an OFDM symbol corresponding to the band. The network device sends the synchronization information in advance, so that the time advance at the time window position obtained by the terminal device is the threshold X.

Further, the terminal device uses, on the second frequency band and/or the third frequency band (for example, a band 2 and/or a band 3) that do not include the synchronization signal, the time window location that is the same as that of the band 1 that includes the synchronization signal. According to the time calibration between the plurality of frequency bands, the network device can ensure that a time deviation range of the band 2 or the band 3 that does not include the synchronization signal compared with the band 1 that includes the synchronization signal is between a positive threshold X and a negative threshold X, that is, between -X and X. Therefore, a deviation of a time window position obtained based on the synchronization information compared with an actual time window position on the band 2 and the band 3 is between 0 and 2X, and no negative value occurs, to ensure that the time is advanced and there are no time latencies or time lags. Therefore, an OFDM symbol intercepted by using the time window location of the band 1 on the band 2 or the band 3 includes a CP of a current OFDM symbol on the frequency band, but does not include a CP of a next OFDM symbol on the frequency band. A person skilled in the art may understand that the current OFDM symbol and the next OFDM symbol refer to a time sequence of transmitting OFDM symbols in time domain, for example, the current OFDM symbol is earlier than the next OFDM symbol in time.

For example, it is assumed that the threshold X is equal to 50 ns, a time point at which the network device sends the second information to the terminal device on the band 2 is 30 ns later than a time point at which the network device sends the first information to the terminal device on the band 1, and a time point at which the network device sends the third information to the terminal device on the band 3 is 20 ns earlier than a time point at which the network device sends the first information to the terminal device on the band 1. Therefore, a time window location obtained based on the synchronization signal is 80 ns earlier than an actual time window location of the band 2, and is 30 ns earlier than an actual time window location of the band 3.

Therefore, the network device performs time calibration on the plurality of frequency bands, and sends the synchronization information on the first frequency band in advance, to delay transmission of other information that does not include the synchronization information on another frequency band, and further reduce impact of the time deviation on performance, resolve a problem of interference caused when the synchronization signal is shared, reduce a precision requirement on performing time calibration on the plurality of frequency bands, and increase implementation feasibility.

The following describes a second implementation in which a time sequence relationship between 201 and 202 is not limited. Specifically, in the first implementation, the network device first sends the SSB to the terminal device, and subsequently sends other information to the terminal device. In this implementation, a sequence of sending the information by the network device is not limited. For example, the network device may first send other information to the terminal device, and then subsequently send the SSB to the terminal device; or the network device may simultaneously send the SSB and the other information to the terminal device; or other information is sent earlier than the SSB. In this way, it can also be ensured that the terminal device uses the synchronization information to adjacent frequency bands in advance, for example, newly activated adjacent frequency bands and/or adjacent carriers, to further activate a frequency band and/or a carrier without the synchronization information.

Similar to the first implementation, as shown in FIG. 4, the terminal device receives, on the band 1, the synchronization information sent by the network device, performs time synchronization with the network device by using the synchronization information, and obtains a time window location of an OFDM symbol corresponding to the band.

Then, the terminal device advances the time window location obtained from the band 1 that includes the synchronization information, and a time difference in advance is a threshold X. For example, an OFDM symbol intercepted on the band 1 based on the time window that is not advanced is $[S_0, S_1, ... , S_{N-1}]$, and an OFDM symbol intercepted on the band 1 based on the time window that is advanced is $[S_{N-K}, S_{N-K+1}, ... , S_{N-1}, S_0, S_1, ... , S_{N-K-1}]$, where K is a length of advance, and time corresponding to the K basic units of time is X. Further, the terminal device uses the advanced time window location on the band 2 or the band 3 that does not include the synchronization information. According to the time calibration between the plurality of frequency bands, the network device can ensure that a time deviation range of the band 2 or the band 3 that does not include the synchronization signal compared with the band 1 that includes the synchronization signal is between a positive threshold X and a negative threshold X, that is, between -X and X. Therefore, a deviation of a time window position obtained based on the synchronization information compared with an actual time window position on the band 2 and the band 3 is between 0 and 2X, and no negative value occurs, to ensure that the time is advanced and there are no time latencies or time lags. Therefore, an OFDM symbol intercepted by using the time window location of the band 1 on the band 2 or the band 3 includes a CP of a current OFDM symbol on the frequency band, but does not include a CP of a next OFDM symbol on the frequency band.

Therefore, the terminal device uses, on the frequency band that does not include the synchronization information, the time window location that is obtained in advance from the frequency band that includes the synchronization information, to avoid intercepting a CP of a next OFDM symbol on the frequency band that does not include the synchronization information, reduce impact of a time deviation on performance, resolve a problem of interference caused by sharing a synchronization signal, reduce a requirement on precision of time calibration on the plurality of frequency bands, and further increase implementation feasibility.

This embodiment of the present invention may be generally used in a case in which OFDM symbols between a plurality of carriers use a same subcarrier spacing (subcarrier spacing, SCS), or duration of OFDM symbols on a plurality of carriers is the same as duration of CPs corresponding to the OFDM symbols. It may be understood that the foregoing solution may be further extended to a scenario in which different subcarrier spacings are used for OFDM symbols between a plurality of carriers. For example, an SCS of the band 1 that includes the synchronization information is 15 kHz (kHz), and an SCS of the band 2 that does not include the synchronization signal is 30 kHz. In this case, a total length of one OFDM symbol on the band 1 and a CP corresponding to the OFDM symbol is equal to a total length of two OFDM symbols on the band 2 and CPs corresponding to the two OFDM symbols. When the time window position of the band 1 is aligned with the time window position of the band 2, if an OFDM symbol intercepted on the band 1 based on the time window position of the band 1 is $[S_0, S_1, \ldots, S_{N-1}]$, OFDM symbols intercepted on the band 2 by using the time window position are

$$[\hat{S}_0^1, \hat{S}_1^1, \ldots, \hat{S}_{N/2-1}^1] \text{ and } [\hat{S}_0^2, \hat{S}_1^2, \ldots, \hat{S}_{N/2-1}^2].$$

When the time window position of the band 1 is earlier than the time window position of the band 2, OFDM symbols intercepted on the band 2 by using the time window position

$$[\hat{S}_{N/2-K}^1, \ldots, \hat{S}_{N/2-1}^1, \hat{S}_0^1, \hat{S}_1^1, \ldots, \hat{S}_{N/2-K-1}^1] \text{ and }$$

$$[\hat{S}_{N/2-K}^2, \ldots, \hat{S}_{N/2-1}^2, \hat{S}_0^2, \hat{S}_1^2, \ldots, \hat{S}_{N/2-K-1}^2],$$

where K is a length of advance, and time corresponding to K basic units of time is X.

The foregoing mainly describes, from a perspective of interactions between the network elements, the solutions provided in this application. It may be understood that, to implement the foregoing functions, the foregoing network elements include corresponding hardware structures and/or software modules for performing the functions. A person of ordinary skill in the art should easily be aware that, in combination with the examples described in embodiments disclosed in this specification, units, algorithms and steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

It can be understood that the steps or operations correspondingly implemented by the terminal device in the foregoing method embodiments may alternatively be implemented by a component (for example, a chip or a circuit) configured on the terminal device. Corresponding steps or operations implemented by the network device may alternatively be implemented by a component (for example, a chip or a circuit) configured on the network device.

An embodiment of this application further provides an apparatus configured to implement any one of the foregoing methods, for example, provides an apparatus including units (or means) configured to implement the steps performed by the terminal device in any one of the foregoing methods. For example, an apparatus is provided, and includes units (or means) configured to implement the steps performed by the network device in any one of the foregoing methods.

FIG. 5 is a diagram of a communication apparatus according to an embodiment of this application. The apparatus is configured to implement steps performed by the corresponding network device in the method embodiment in FIG. 2. As shown in FIG. 5, the apparatus 500 includes a transceiver unit 510 and a determining unit 520.

The transceiver unit 510 is configured to send first information to a terminal device based on a first frequency band and a first time unit, where the first information includes synchronization information; and send second information to the terminal device based on a second frequency band and a second time unit, where the second information includes information other than the synchronization information. The determining unit 520 is configured to perform time calibration on the first time unit of the first frequency band and the second time unit of the second frequency band.

For an obtained time window of the second information, refer to a time window of the first information.

In a possible implementation method, the determining unit 520 is specifically configured to adjust a time deviation between the first time unit and the second time unit to be less than or equal to a first threshold.

In a possible implementation method, the first time unit is earlier than the second time unit in time domain.

In a possible implementation method, the determining unit 520 advances the first time unit based on a second threshold; or the determining unit 520 delays the second time unit based on a third threshold.

In a possible implementation method, the first time unit includes the time window of the first information and a time window of a cyclic prefix, and the time window of the first information does not overlap with the time window of the cyclic prefix; and the second time unit includes the time window of the second information and the time window of the cyclic prefix, and the time window of the second information does not overlap with the time window of the cyclic prefix.

It can be understood that the foregoing units may also be referred to as modules, circuits, or the like, and the foregoing units may be disposed independently, or some or all of the units may be integrated. The transceiver unit 510 may also be referred to as a communication interface.

Optionally, the communication apparatus 500 may further include a storage unit. The storage unit is configured to store data or instructions (which may also be referred to as code or a program). The foregoing units may interact with or be coupled to the storage unit, to implement a corresponding method or function. For example, the processing unit may read the data or the instructions in the storage unit, to enable the communication apparatus to implement the methods in the foregoing embodiments.

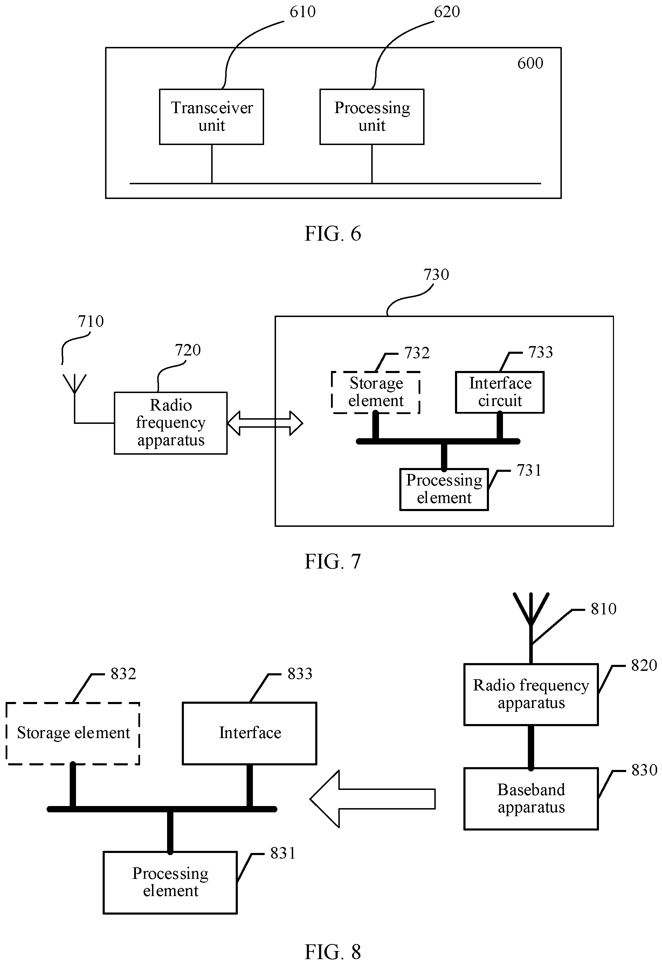

FIG. 6 is a diagram of a communication apparatus according to an embodiment of this application. The apparatus is configured to implement steps performed by the corresponding terminal device in the method embodiment in FIG. 2. As shown in FIG. 6, the apparatus 600 includes a transceiver unit 610 and a processing unit 620.

The transceiver unit 610 is configured to: receive first information from a network device based on a first frequency band and a first time unit, where the first information includes synchronization information; and receive second information from the network device based on a second frequency band and a second time unit, where the second information includes information other than the synchronization signal.

For an obtained time window of the second information, refer to a time window of the first information.

In a possible implementation method, a time deviation between the first time unit and the second time unit is less than or equal to a first threshold.

In a possible implementation method, the first time unit is earlier than the second time unit in time domain.

In a possible implementation method, the processing unit 620 is configured to advance the obtained time window of the first information by a second threshold.

In a possible implementation method, the first time unit includes the time window of the first information and a time window of a cyclic prefix, and the time window of the first information does not overlap with the time window of the cyclic prefix; and the second time unit includes the time window of the second information and the time window of the cyclic prefix, and the time window of the second information does not overlap with the time window of the cyclic prefix.

It can be understood that the foregoing units may also be referred to as modules, circuits, or the like, and the foregoing units may be disposed independently, or some or all of the units may be integrated. The transceiver unit 610 may also be referred to as a communication interface, and the processing unit 620 may also be referred to as a processor.

Optionally, the communication apparatus 600 may further include a storage unit. The storage unit is configured to store data or instructions (which may also be referred to as code or a program). The foregoing units may interact with or be coupled to the storage unit, to implement a corresponding method or function. For example, the processing unit may read the data or the instructions in the storage unit, to enable the communication apparatus to implement the methods in the foregoing embodiments.

It should be understood that division into the units in the apparatus is merely division of logical functions, and during actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, the units in any one of the foregoing apparatuses may be one or more integrated circuits configured to implement the foregoing methods, for example, one or more application-specific integrated circuits (Application-Specific Integrated Circuits, ASICs), one or more digital signal processors(digital signal processors, DSPs), one or more field programmable gate arrays (Field Programmable Gate Arrays, FPGAs), or a combination of at least two of these integrated circuit forms. For another example, when the units in the apparatus may be implemented in a form of scheduling a program by the processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SoC).

The foregoing units for receiving (for example, the receiving unit) is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending (for example, the sending unit) is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

FIG. 7 is a diagram of a structure of a terminal device according to an embodiment of this application. The terminal device is configured to implement an operation of the terminal device in the embodiment corresponding to FIG. 2. As shown in FIG. 7, the terminal device includes an antenna 710, a radio frequency apparatus 720, and a baseband apparatus 730. The antenna 710 is connected to the radio frequency apparatus 720. In a downlink direction, the radio frequency apparatus 720 receives, through the antenna 710, information sent by a network device, and sends the information sent by the network device to the baseband apparatus 730 for processing. In an uplink direction, the baseband apparatus 730 processes information of the terminal device, and sends the information to the radio frequency apparatus 720; and the radio frequency apparatus 720 processes the information of the terminal device, and then sends the information to a network device through the antenna 710.

The baseband apparatus 730 is configured to implement processing of each communication protocol layer of data. The baseband apparatus 730 may be a subsystem of the terminal device. In this case, the terminal device may further include another subsystem, for example, a central processing subsystem, configured to process an operating system and an application layer of the terminal device. For another example, a peripheral subsystem is configured to connect to another device. The baseband apparatus 730 may be an independently disposed chip.

The baseband apparatus 730 may include one or more processing elements 731, for example, include a main control CPU and another integrated circuit, and include an interface circuit 733. In addition, the baseband apparatus 730 may further include a storage element 732. The storage element 732 is configured to store data and a program. The program used to perform the method performed by the terminal device in the foregoing method may be stored, or may not be stored in the storage element 732. For example, the program is stored in a memory other than the baseband apparatus 730. When the program is used, the baseband apparatus 730 loads the program to a cache for use. The interface circuit 733 is configured to communicate with the apparatus. The foregoing apparatus may be located in the baseband apparatus 730. The baseband apparatus 730 may be implemented by using a chip. The chip includes at least one processing element and an interface circuit. The processing element is configured to perform the steps of any one of the methods performed by the foregoing terminal device, and the interface circuit is configured to communicate with another apparatus. In an implementation, the units that implement the steps in the foregoing methods may be implemented in a form of scheduling a program by a processing element. For example, the apparatus includes a processing element and a storage element, and the processing element invokes a program stored in the storage element to perform the methods performed by the terminal device in the foregoing method embodiments. The storage element may be a storage element located on a same chip as the processing element, namely, an on-chip storage element.

In another implementation, the program used to perform the method performed by the terminal device in the foregoing method may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiment.

In another implementation, units of the terminal device that implement the steps in the foregoing methods may be configured as one or more processing elements. These processing elements are disposed on the baseband apparatus 730. The processing elements herein may be integrated circuits, for example, one or more ASICs, one or more DSPs, one or more FPGAs, or a combination of the integrated circuits. These integrated circuits may be integrated together to form a chip.

The units that implement the steps in the foregoing methods may be integrated together and implemented in a form of a system-on-a-chip (system-on-a-chip, SoC). The SoC chip is configured to implement the foregoing methods. At least one processing element and storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by invoking a program by the processing element, and functions of some units may be implemented by the integrated circuit.

It can be learned that the foregoing apparatus may include at least one processing element and an interface circuit, where the at least one processing element is configured to perform any one of the methods performed by the terminal device in the foregoing method embodiments. The processing element may perform some or all steps performed by the terminal device in a first manner, to be specific, by invoking a program stored in the storage element; or may perform some or all steps performed by the terminal device in a second manner, to be specific, by combining instructions and a hardware integrated logic circuit in a processor element. Certainly, some or all steps performed by the terminal device may be alternatively performed by combining the first manner and the second manner.

As described above, the processing element herein may be a general-purpose processor, for example, a CPU, or may be one or more integrated circuits configured to implement the foregoing methods, for example, one or more ASICs, one or more DSPs, one or more FPGAs, or a combination of at least two of the integrated circuits. The storage element may be one memory, or may be a general term of a plurality of storage elements.

FIG. 8 is a diagram of a structure of a network device according to an embodiment of this application. The network device is configured to implement an operation of the network device in the embodiment corresponding to FIG. 2. As shown in FIG. 8, the network device includes an antenna 810, a radio frequency apparatus 820, and a baseband apparatus 830. The antenna 810 is connected to the radio frequency apparatus 820. In an uplink direction, the radio frequency apparatus 820 receives, through the antenna 810, information sent by a terminal device, and sends the information sent by the terminal device to the baseband apparatus 830 for processing. In a downlink direction, the baseband apparatus 830 processes information of the terminal device, and sends the information to the radio frequency apparatus 820; and the radio frequency apparatus 820 processes the information of the terminal device, and then sends the information to the terminal device through the antenna 810.

The baseband apparatus 830 may include one or more processing elements 831, for example, include a main control CPU and another integrated circuit, and further include an interface 833. In addition, the baseband apparatus 830 may further include a storage element 832. The storage element 832 is configured to store a program and data. The interface 833 is configured to exchange information with the radio frequency apparatus 820. The interface is, for example, a common public radio interface (common public radio interface, CPRI). The foregoing apparatus used in the network device may be located in the baseband apparatus 830. For example, the foregoing apparatus used in the network device may be a chip on the baseband apparatus 830. The chip includes at least one processing element and an interface circuit. The processing element is configured to perform the steps of any one of the methods performed by the network device, and the interface circuit is configured to communicate with another apparatus. In an implementation, units of the network device that implement the steps in the foregoing methods may be implemented in a form of scheduling a program by the processing element. For example, the apparatus used for the network device includes a processing element and a storage element. The processing element invokes a program stored in the storage element, to perform the method performed by the network device in the foregoing method embodiments. The storage element may be a storage element on a same chip as the processing element, that is, an on-chip storage element, or may be a storage element on a different chip from the processing element, that is, an off-chip storage element.

In another implementation, units of the network device that implement the steps in the foregoing methods may be configured as one or more processing elements. These processing elements are disposed on the baseband apparatus. The processing elements herein may be integrated circuits, for example, one or more ASICs, one or more DSPs, one or more FPGAs, or a combination of the integrated circuits. These integrated circuits may be integrated together to form a chip.

Units of the network device that implement the steps in the foregoing methods may be integrated together, and implemented in a form of a system-on-a-chip (system-on-a-chip, SoC). For example, the baseband apparatus includes the SoC chip, configured to implement the foregoing methods. At least one processing element and storage element may be integrated into the chip, and the processing element invokes a program stored in the storage element to implement the foregoing method performed by the network device. Alternatively, at least one integrated circuit may be integrated into the chip, to implement the foregoing method performed by the network device. Alternatively, with reference to the foregoing implementations, functions of some units may be implemented by invoking a program by the processing element, and functions of some units may be implemented by the integrated circuit.

It can be learned that the foregoing apparatus used for the network device may include at least one processing element and interface circuit. The at least one processing element is configured to perform any one of the methods performed by the network device in the foregoing method embodiments. The processing element may perform some or all steps performed by the network device in a first manner, to be specific, by invoking a program stored in the storage element; or may perform some or all steps performed by the network device in a second manner, to be specific, by combining instructions and a hardware integrated logic circuit in a processor element. Certainly, some or all steps performed by the network device may be alternatively performed by combining the first manner and the second manner.

As described above, the processing element herein may be a general-purpose processor, for example, a CPU, or may be one or more integrated circuits configured to implement the foregoing methods, for example, one or more ASICs, one or more DSPs, one or more FPGAs, or a combination of at least two of the integrated circuits. The storage element may be one memory, or may be a general term of a plurality of storage elements.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state drive, SSD)), or the like.

A person of ordinary skill in the art may understand that first, second, third, fourth, and various reference numerals in this application are merely used for differentiation for ease of description, and are not used to limit a scope of embodiments of this application, and also indicate a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, including any combination of a single item (piece) or a plurality of items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

In one or more examples of designs, the functions described in this application may be implemented by using hardware, software, firmware, or any combination thereof. If the present invention is implemented by software, these functions may be stored in a computer-readable medium or are transmitted to the computer-readable medium in a form of one or more instructions or code. The computer-readable medium is either a computer storage medium or a communication medium that enables a computer program to move from one place to another. The storage medium may be any available medium that may be accessed by a general-purpose or a special computer. For example, such a computer-readable medium may include but is not limited to a RAM, a ROM, an EEPROM, a CD-ROM, or another optical disc storage, a disk storage or another magnetic storage apparatus, or any other medium that may be used to carry or store program code, where the program code is in a form of instructions or a data structure or in a form that can be read by a general-purpose computer or a special computer, or a general-purpose or a special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data in a magnetic manner, and the disk usually optically copies data in a laser manner. The foregoing combination may also be included in the computer-readable medium.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium that may be accessed by a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application. According to the foregoing descriptions of this specification in this application, technologies in the art may use or implement the content of this application. Any modification based on the disclosed content shall be considered apparent in the art. The basic principles described in this application may be used for other variations without departing from the essence and scope of this application. Therefore, the content disclosed in this application is not limited to the described embodiments and designs but may also be extended to a maximum scope that is consistent with the principles and disclosed new features of this application.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, comprising:

    performing, by a network device, time calibration on a first time unit of a first frequency band and a second time unit of a second frequency band;
    sending, by the network device, first information to a terminal device based on the first frequency band and the first time unit, wherein the first information comprises synchronization information; and
    sending, by the network device, second information to the terminal device based on the second frequency band and the second time unit, wherein the second information comprises information other than the synchronization information, wherein
    for an obtained time window of the second information, reference is made to a time window of the first information.

2. The method according to claim 1, wherein the performing, by a network device, time calibration specifically comprises:
    adjusting, by the network device, a time deviation between the first time unit and the second time unit to be less than or equal to a first threshold.

3. The method according to claim 1 or 2, wherein the first time unit is earlier than the second time unit in time domain.

4. The method according to any one of claims 1 to 3, further comprising:

    advancing, by the network device, the first time unit based on a second threshold; or
    delaying, by the network device, the second time unit based on a third threshold.

5. The method according to any one of claims 1 to 4, wherein

    the first time unit comprises the time window of the first information and a time window of a cyclic prefix, and the time window of the first information does not overlap with the time window of the cyclic prefix; and
    the second time unit comprises the time window of the second information and the time window of the cyclic prefix, and the time window of the second information does not overlap with the time window of the cyclic prefix.

6. A communication method, comprising:

    receiving, by a terminal device, first information from a network device based on a first frequency band and a first time unit, wherein the first information comprises synchronization information; and
    receiving, by the terminal device, second information from the network device based on a second frequency band and a second time unit, wherein the second information comprises information other than the synchronization signal, wherein
    for an obtained time window of the second information, reference is made to a time window of the first information.

7. The method according to claim 6, wherein a time deviation between the first time unit and the second time unit is less than or equal to a first threshold.

8. The method according to claim 6 or 7, wherein the first time unit is earlier than the second time unit in time domain.

9. The method according to any one of claims 6 to 8, further comprising:
    advancing, by the terminal device, the obtained time window of the first information by a second threshold.

10. The method according to any one of claims 6 to 9, wherein

    the first time unit comprises the time window of the first information and a time window of a cyclic prefix, and the time window of the first information does not overlap with the time window of the cyclic prefix; and

the second time unit comprises the time window of the second information and the time window of the cyclic prefix, and the time window of the second information does not overlap with the time window of the cyclic prefix.

11. A communication apparatus, comprising a memory and a processor, wherein the memory is configured to store a computer program or instructions, the processor is configured to execute the computer program or the instructions stored in the memory, and when the processor executes the computer program or the instructions, the method according to any one of claims 1 to 10 is performed.

12. A computer-readable storage medium, storing computer-readable instructions, and when a communication apparatus reads and executes the computer-readable instructions, the communication apparatus is enabled to perform the method according to any one of claims 1 to 10.

13. A computer program product, storing computer-readable instructions, and when a communication apparatus reads and executes the computer-readable instructions, the communication apparatus is enabled to perform the method according to any one of claims 1 to 10.

14. A chip, comprising a processor, wherein the processor is coupled to a memory, and is configured to execute a computer program or instructions stored in the memory; and when the processor executes the computer program or the instructions, the method according to any one of claims 1 to 10 is performed.

FIG. 1

A terminal device receives first information from a network device based on a first frequency band and a first time unit ⌇ 201

The terminal device receives second information from the network device based on a second frequency band and a second time unit ⌇ 202

FIG. 2

Advanced time window

Advanced band 1 | CP | OFDM

Band 1 | CP | OFDM

Band 2 | CP | OFDM

Band 3 | CP | OFDM

FIG. 3

Time window obtained based on a synchronization signal

Band 1 | CP | OFDM

Band 2 | CP | OFDM

Band 3 | CP | OFDM

Advanced time window

FIG. 4

510        520

500

Transceiver unit

Determining unit

FIG. 5

610    620

600

Transceiver
unit

Processing
unit

FIG. 6

730

710

720

732    733

Storage
element

Interface
circuit

Radio
frequency
apparatus

731

Processing
element

FIG. 7

810

832    833

820

Storage element

Interface

Radio frequency
apparatus

830

831

Baseband
apparatus

Processing
element

FIG. 8

## INTERNATIONAL SEARCH REPORT

| | International application No. |
|---|---|
| | **PCT/CN2022/130182** |

**A.    CLASSIFICATION OF SUBJECT MATTER**

H04W28/10(2009.01)i;H04W72/04(2023.01)i

According to International Patent Classification (IPC) or to both national classification and IPC

**B.    FIELDS SEARCHED**

Minimum documentation searched (classification system followed by classification symbols)

H04W28/-; H04W72/-; H04W56/-

Documentation searched other than minimum documentation to the extent that such documents are included in the fields searched

Electronic data base consulted during the international search (name of data base and, where practicable, search terms used)

CNABS; CNTXT; CNKI; 百度文库, BAIDU WENKU; ENTXTC: 第二, 第二载波, 第一, 第一载波, 跟踪参考信号, 华为, 基站, 李新县, 彭金磷, 频段, 载波, 时间, 时间单元, 时间校准, 时隙, 同步, 同步信息, 同步信号, 网络设备, 校准, 载波, 载波聚合, 第一频段, 第二频段, CA, 分开, 单独, 延后, 提前, 时间窗; VEN; EPTXT; USTXT; WOTXT; IEEE; 3GPP: carrier, carrier aggregation, SSB, CA, frequency band, time unit, slot, synchronization, base station, BS

**C.    DOCUMENTS CONSIDERED TO BE RELEVANT**

| Category* | Citation of document, with indication, where appropriate, of the relevant passages | Relevant to claim No. |
|---|---|---|
| X | WO 2021092920 A1 (GUANGDONG OPPO MOBILE COMMUNICATIONS CO., LTD.) 20 May 2021 (2021-05-20)<br>description, page 3, line 20-page 7, line 43 | 1-14 |
| A | CN 102547967 A (CHINA UNITED NETWORK COMMUNICATIONS GROUP CO., LTD. et al.) 04 July 2012 (2012-07-04)<br>entire document | 1-14 |
| A | CN 110290581 A (CHONGQING UNIVERSITY OF POSTS AND TELECOMMUNICATIONS) 27 September 2019 (2019-09-27)<br>entire document | 1-14 |
| A | US 2021051653 A1 (COMCAST CABLE COMMUNICATIONS, LLC.) 18 February 2021 (2021-02-18)<br>entire document | 1-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 January 2023** | **08 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

International application No.

**PCT/CN2022/130182**

| Patent document cited in search report | | | Publication date (day/month/year) | Patent family member(s) | | | Publication date (day/month/year) |
|---|---|---|---|---|---|---|---|
| WO | 2021092920 | A1 | 20 May 2021 | BR | 112022000912 | A2 | 28 June 2022 |
| | | | | US | 2022007398 | A1 | 06 January 2022 |
| | | | | KR | 20220100522 | A | 15 July 2022 |
| | | | | EP | 3930397 | A1 | 29 December 2021 |
| | | | | EP | 3930397 | A4 | 29 December 2021 |
| | | | | CN | 113170463 | A | 23 July 2021 |
| | | | | CN | 113595708 | A | 02 November 2021 |
| | | | | IN | 202117042692 | A | 31 December 2021 |
| | | | | VN | 87446 A | A | 25 July 2022 |
| CN | 102547967 | A | 04 July 2012 | CN | 102547967 | B | 25 March 2015 |
| CN | 110290581 | A | 27 September 2019 | CN | 110290581 | B | 06 July 2021 |
| US | 2021051653 | A1 | 18 February 2021 | EP | 3780882 | A1 | 17 February 2021 |
| | | | | CA | 3090158 | A1 | 15 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111327690